# EUROPÄISCHE PATENTANMELDUNG

(11) **EP 3 367 546 A1**
(43) Veröffentlichungstag der Anmeldung: **29.08.2018**
(21) Anmeldenummer: 17158176.2
(22) Anmeldetag: 27.02.2017
(51) Int. Cl.: H02K 11/20, H02K 11/40, H02K 11/35

(54) **VORRICHTUNG UND VERFAHREN ZUR ÜBERWACHUNG EINES ABLEITSTROMES**

(71) Anmelder: Siemens Aktiengesellschaft, 80333 München (DE)
(72) Erfinder: Theile, Oliver, 13437 Berlin (DE); Villnow, Michael, 90765 Fürth (DE)

(57) **Zusammenfassung**

Die Erfindung betrifft eine Vorrichtung und ein Verfahren zur Überwachung einer elektrischen Maschine (I) aufweisend mindestens eine Erdungseinrichtung (1), insbesondere Erdungsbürste, zwischen einer rotierbaren Achse (3) und einem Stator (5), dadurch gekennzeichnet, dass eine Überwachungsvorrichtung (7) die Erdungsfunktion, insbesondere einen Übergangswiderstand, der mindestens einen Erdungseinrichtung (1) mittels eines jeweils an dieser positionierten Funksensors (9) überwacht.

## Beschreibung

Bei bestimmten elektrischen Maschinen kommt es ebenso bei ordnungsgemäßem Gebrauch zu Ableitströmen von einer rotierenden Welle zu einem Stator beispielsweise bei einer Papiermaschine. Wenn diese Ströme nicht abgeleitet werden, können diese zu einer Aufladung der Welle führen, sodass sich die Aufladung im Anschluss unkontrolliert über das Lager entladen kann. Diese Entladungen oder ebenso Lagerströme können das Lager dauerhaft schädigen und bis zur Zerstörung des Lagers führen. Üblicherweise wird dies mittels Erdungseinrichtungen, wie beispielsweise als Erdungsbürsten ausgebildet sind, verhindert. Erdungseinrichtungen können alternativ als Erdungspolster oder Schwämme mechanisch, oder allgemein ohmsch ausgeführt sein. Beispielsweise sorgen die Erdungsbürsten für eine kontrollierte Ableitung der Ladung, wenn die Erdungsbürsten verschließen sind, müssen diese getauscht werden.

Herkömmlicherweise werden die Erdungsbürsten nach festen Intervallen getauscht, auch wenn diese sich noch in einwandfreiem Zustand befinden. Dies führt zu erhöhten Wartungskosten durch unnötige Wartungsarbeiten, Stillstandzeiten und Materialkosten.

Ableitstrom ist insbesondere ein aufgrund einer zeitlich ansteigenden elektrischen Spannung zwischen einer rotierenden Welle und einem Stator kontrolliert über Erdungsbürsten abgeführter Strom.

Überwachen bedeutet insbesondere Messen und in einem Alarmzustand Ausgeben eines Signals. Eine Überwachungsvorrichtung kann eine Rechnereinrichtung aufweisen.

Gateway bedeutet insbesondere eine Übergabestelle oder Funkstelle, insbesondere eines Funksensors oder Funksensorknotens, insbesondere unter Verwendung von Standards, wie es beispielsweise Dust Networks IP-Mesh oder Bluetooth LE sind.

Es ist Aufgabe der Erfindung bei elektrischen Maschinen mit Erdungsbürsten zur Abführung von Ableitströmen nicht erforderliche Wartungsarbeiten und Stillstandzeiten zu vermeiden und insbesondere Kosten zu sparen.

Die Aufgabe wird durch eine Vorrichtung gemäß dem Hauptanspruch und einem Verfahren gemäß dem Nebenanspruch gelöst.

Gemäß einem ersten Aspekt wird eine Vorrichtung zur Überwachung einer elektrischen Maschine mit mindestens einer Erdungseinrichtung, insbesondere Erdungsbürste, zwischen einer rotierenden Achse oder Welle und einem Stator vorgeschlagen, wobei die Überwachungsvorrichtung die Erdungsfunktion, insbesondere einen Übergangswiderstand, der mindestens einen Erdungseinrichtung mittels eines jeweils an dieser positionierten Funksensors überwacht.

Gemäß einem zweiten Aspekt wird ein Verfahren zur Überwachung einer elektrischen Maschine mit mindestens einer Erdungseinrichtung, insbesondere Erdungsbürste, zwischen einer rotierenden Achse oder Welle und einem Stator vorgeschlagen, wobei eine Überwachungsvorrichtung die Erdungsfunktion, insbesondere einen Übergangswiderstand, der mindestens einen Erdungseinrichtung mittels eines jeweils an dieser positionierten Funksensors überwacht.

Weitere vorteilhafte Ausgestaltungen werden mit den Unteransprüchen beansprucht.

Gemäß einer vorteilhaften Ausgestaltung kann ein jeweiliger Funksensor einen durch die Erdungseinrichtung fließenden elektrischen Ableitungsstrom messen. Gemäß einer weiteren vorteilhaften Ausgestaltung kann die Überwachungsvorrichtung eine Unterschreitung eines Schwellwertes eines jeweiligen Ableitstroms oder eine Überschreitung eines Schwellwertes eines jeweiligen Übergangswiderstandes erfassen und einen Alarm auslösen.

Gemäß einer weiteren vorteilhaften Ausgestaltung kann ein jeweiliger elektrischer Ableitstrom den jeweiligen Funksensor mit Strom versorgen.

Gemäß einer weiteren vorteilhaften Ausgestaltung können weitere Funksensoren der Überwachungsvorrichtung Betriebsparameter, insbesondere Arbeitspunkte der elektrischen Maschine erfassen.

Gemäß einer weiteren vorteilhaften Ausgestaltung können alle Funksensoren als Funksensorknoten vernetzt sein und die Überwachungsvorrichtung Ableitstromwerte und/oder Übergangswiderstände und Betriebsparameter erfassen.

Gemäß einer weiteren vorteilhaften Ausgestaltung kann die Überwachungsvorrichtung eine Rechnereinrichtung aufweisen, die mittels eines Auswertealgorithmus an gemessenen Ableitstromwerten und erfassten Betriebsparametern eine Korrelation ausführen.

Gemäß einer weiteren vorteilhaften Ausgestaltung kann die Rechnereinrichtung aus der Korrelation eine Bestimmung ausführen, ob die elektrische Maschine im Betrieb ist und/oder ob Ableitströme zu erwarten sind.

Gemäß einer weiteren vorteilhaften Ausgestaltung kann die Überwachungsvorrichtung auf der Grundlage des Auswertealgorithmus einen Alarm auslösen.

Gemäß einer weiteren vorteilhaften Ausgestaltung kann die Erdungseinrichtung an einem Lager der elektrischen Maschine angeordnet sein.

Gemäß einer weiteren vorteilhaften Ausgestaltung kann der Funksensor eine Sensor-Marke sein.

Weitere vorteilhafte Ausgestaltungen werden in Verbindung mit den Figuren näher beschrieben. Es zeigen:
- Figur 1: ein Ausführungsbeispiel einer erfindungsgemäßen Überwachungsvorrichtung;
- Figur 2: ein Ausführungsbeispiel eines erfindungsgemäßen Verfahrens.

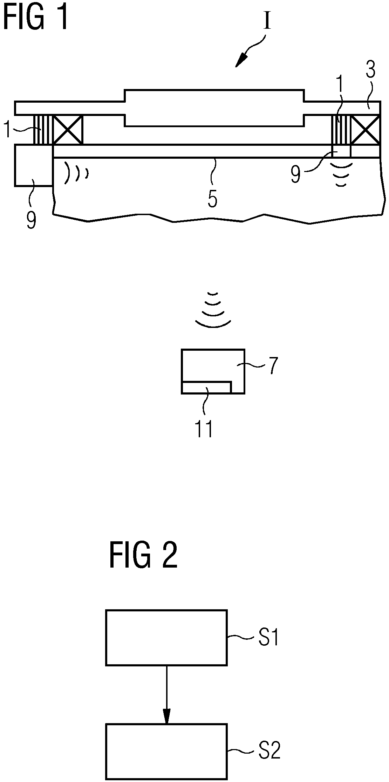

Figur 1 zeigt ein Ausführungsbeispiel einer erfindungsgemäßen Überwachungsvorrichtung 7. Die Überwachungsvorrichtung 7 überwacht eine elektrische Maschine I mit mindestens einer Erdungseinrichtung 1, die insbesondere als eine Erdungsbürste ausgestaltet ist. Die Erdungseinrichtung 1 ist zwischen einer rotierbaren Welle oder Achse 3 und einem Stator 5 der elektrischen Maschine I positioniert. Die Überwachungsvorrichtung 7 überwacht die Erdungsfunktion, und hierfür insbesondere einen Übergangswiderstand von der rotierbaren Achse 3 zu dem Stator 5. Dies wird mittels eines jeweils an der Erdungseinrichtung 1 positionierten Funksensors 9 überwacht. Die Überwachungsvorrichtung 7 erfasst eine Unterschreitung eines Schwellenwertes eines jeweiligen Ableitstroms oder eine Überschreitung eines Schwellwertes eines jeweiligen Übergangswiderstandes und löst entsprechend ein Alarm aus, der zu einer Wartung führt.

Die Erdungsfunktion der Bürste wird mittels einer Elektronik überwacht, welche drahtlos mit einem Gateway verbunden ist. Dabei wird ein elektrischer Ableitstrom gemessen, der unter Umständen ebenso zur Versorgung der Elektronik bzw. der Überwachungsvorrichtung 7, die eine Rechnereinrichtung 11 aufweisen kann, verwendet werden. Die Informationen werden an das Gateway übertragen. Durch geschickte Korrelation der Daten mit anderen Maschineninformationen, wie beispielsweise den aktuellen Arbeitspunkt der Maschine, kann ermittelt werden, ob sich die Maschine im Betrieb befindet und ob Ableitströme zu erwarten sind. Erst wenn die Erdungsfunktion nachlässt, das heißt, der Übergangswiderstand steigt, oder ein Alarm wird durch den Auswertealgorithmus ausgelöst, wird die Bürste getauscht.

Durch moderne Funktechnologien, beispielsweise Bluetooth, ist es möglich Funksensorknoten über einen langen Zeitraum mit kleinsten Energiemengen zu versorgen. Diese Technologien haben einen technischen wie finanziellen Reifegrad erreicht, mit dem es wirtschaftlich ist, die oben genannten Überwachungsfunktionen zu realisieren. Durch eine intelligente Vernetzung verschiedener Sensoren lassen sich Zustände der Maschine ableiten und berechnen, ohne das zusätzliche Sensoren installiert werden müssen.

Figur 2 zeigt ein Ausführungsbeispiel eines erfindungsgemäßen Verfahrens. Das Verfahren entspricht der Überwachung gemäß der Anordnung gemäß Figur 1. Dabei misst in einem ersten Schritt S1 ein jeweiliger Funksensor einen durch die Erdungseinrichtung fließenden elektrischen Ableitstrom. In einem zweiten Schritt S2 wird ein Alarm ausgelöst, wenn die Überwachungsvorrichtung eine Unterschreitung eines Schwellwertes eines jeweiligen Ableitstromes oder eine Überschreitung eines Schwellwertes eines jeweiligen Übergangswiderstands erfasst.

## Patentansprüche

1. Überwachungsvorrichtung (7) zur Überwachung einer elektrische Maschine (I) mit mindestens einer Erdungseinrichtung (1), insbesondere Erdungsbürste, zwischen einer rotierbaren Achse (3) und einem Stator (5), **dadurch gekennzeichnet, dass**
die Überwachungsvorrichtung (7) die Erdungsfunktion, insbesondere einen Übergangswiderstand, der mindestens einen Erdungseinrichtung (1) mittels eines jeweils an dieser positionierten Funksensors (9) überwacht.

2. Überwachungsvorrichtung (7) gemäß Anspruch 1,
**dadurch gekennzeichnet, dass**
ein jeweiliger Funksensor (9) einen durch die Erdungseinrichtung fließenden elektrischen Ableitstrom misst.

3. Überwachungsvorrichtung (7) gemäß Anspruch 2,
**dadurch gekennzeichnet, dass**
die Überwachungsvorrichtung eine Unterschreitung eines Schwellwertes eines jeweiligen Ableitstroms oder eine Überschreitung eines Schwellwertes eines jeweiligen Übergangswiderstand erfasst und einen Alarm auslöst.

4. Überwachungsvorrichtung (7) gemäß Anspruch 2 oder 3, **dadurch gekennzeichnet, dass**
ein jeweiliger elektrischer Ableitstrom den jeweiligen Funksensor stromversorgt.

5. Überwachungsvorrichtung (7) gemäß Anspruch 2, 3 oder 4,
**dadurch gekennzeichnet, dass**
weitere Funksensoren der Überwachungsvorrichtung Betriebsparameter, insbesondere Arbeitspunkte, der elektrischen Maschine erfassen.

6. Überwachungsvorrichtung (7) gemäß Anspruch 5,
**dadurch gekennzeichnet, dass**
alle Funksensoren (9) als Funksensorknoten vernetzt sind und die Überwachungsvorrichtung Ableitstromwerte und/oder Übergangswiderstände und Betriebsparameterwerte erfasst.

7. Überwachungsvorrichtung (7) gemäß Anspruch 6,
**dadurch gekennzeichnet, dass**
die Überwachungsvorrichtung (7) eine Rechnereinrichtung (11) aufweist, die mittels eines Auswertealgorithmus an gemessenen Ableitstromwerten und erfassten Betriebsparameterwerten eine Korrelation ausführt.

8. Überwachungsvorrichtung (7) gemäß Anspruch 7,
**dadurch gekennzeichnet, dass**
die Rechnereinrichtung (11) aus der Korrelation eine Bestimmung ausführt, ob die elektrische Maschine in Betrieb ist und/oder ob Ableitströme zu erwarten sind.

9. Überwachungsvorrichtung (7) gemäß Anspruch 8,
**dadurch gekennzeichnet, dass**
die Überwachungsvorrichtung (7) auf der Grundlage des Auswertealgorithmus einen Alarm auslöst.

10. Überwachungsvorrichtung (7) gemäß einem der vorhergehenden Ansprüche,
**dadurch gekennzeichnet, dass**
die Erdungseinrichtung an einem Lager der elektrischen Maschine angeordnet ist.

11. Überwachungsvorrichtung (7) gemäß einem der vorhergehenden Ansprüche,
**dadurch gekennzeichnet, dass**
der Funksensor ein Sensor-Tag ist.

12. Verfahren zur Überwachung einer elektrischen Maschine (I) aufweisend mindestens eine Erdungseinrichtung (1), insbesondere Erdungsbürste, zwischen einer rotierbaren Achse (3) und einem Stator (5), **dadurch gekennzeichnet, dass**
eine Überwachungsvorrichtung (7) die Erdungsfunktion, insbesondere einen Übergangswiderstand, der mindestens einen Erdungseinrichtung (1) mittels eines jeweils an dieser positionierten Funksensors (9) überwacht.

13. Verfahren gemäß Anspruch 12,
**dadurch gekennzeichnet, dass**
ein jeweiliger Funksensor (9) einen durch die Erdungseinrichtung fließenden elektrischen Ableitstrom misst (S1).

14. Verfahren gemäß Anspruch 13,
**dadurch gekennzeichnet, dass**
die Überwachungsvorrichtung eine Unterschreitung eines Schwellwertes eines jeweiligen Ableitstroms oder eine Überschreitung eines Schwellwertes eines jeweiligen Übergangswiderstand erfasst und einen Alarm auslöst (S2).

15. Verfahren gemäß Anspruch 13 oder 14,
**dadurch gekennzeichnet, dass**
ein jeweiliger elektrischer Ableitstrom den jeweiligen Funksensor stromversorgt.

16. Verfahren gemäß Anspruch 13, 14 oder 15,
**dadurch gekennzeichnet, dass**
weitere Funksensoren der Überwachungsvorrichtung Betriebsparameter, insbesondere Arbeitspunkte, der elektrischen Maschine erfassen.

17. Verfahren gemäß Anspruch 16,
**dadurch gekennzeichnet, dass**
alle Funksensoren (9) als Funksensorknoten vernetzt sind und die Überwachungsvorrichtung Ableitstromwerte und/oder Übergangswiderstände und Betriebsparameterwerte erfasst.

18. Verfahren gemäß Anspruch 17,
**dadurch gekennzeichnet, dass**
die Überwachungsvorrichtung (7) eine Rechnereinrichtung (11) aufweist, die mittels eines Auswertealgorithmus an gemessenen Ableitstromwerten und erfassten Betriebsparameterwerten eine Korrelation ausführt.

19. Verfahren gemäß Anspruch 18,
**dadurch gekennzeichnet, dass**
die Rechnereinrichtung (11) aus der Korrelation eine Bestimmung ausführt, ob die elektrische Maschine in Betrieb ist und/oder ob Ableitströme zu erwarten sind.

20. Verfahren gemäß Anspruch 19,
**dadurch gekennzeichnet, dass**
die Überwachungsvorrichtung (7) auf der Grundlage des Auswertealgorithmus einen Alarm auslöst.

21. Verfahren zur Überwachung einer elektrischen Maschine gemäß einem der vorhergehenden Ansprüche 12 bis 20,
**dadurch gekennzeichnet, dass**
die Erdungseinrichtung an einem Lager der elektrischen Maschine angeordnet wird.

22. Verfahren gemäß einem der vorhergehenden Ansprüche 11 bis 21,
**dadurch gekennzeichnet, dass**
als Funksensor ein Sensor-Tag verwendet wird.
